# EUROPÄISCHE PATENTSCHRIFT

(11) **EP 4 242 246 B1**
(45) Veröffentlichungstag und Bekanntmachung des Hinweises auf die Patenterteilung: **14.10.2026**
(21) Anmeldenummer: 22160943.1
(22) Anmeldetag: 08.03.2022
(51) Int. Cl.: C08G 18/79, E04F 15/04, C09D 183/04, C09D 175/06, C09D 167/08, C09D 133/00, E04F 15/10

(54) **FLUORFREIE BESCHICHTUNGSZUSAMMENSETZUNG**
FLUORINE-FREE COATING COMPOSITION
COMPOSITION DE REVÊTEMENT SANS FLUOR

(43) Veröffentlichungstag der Anmeldung: 13.09.2023
(73) Patentinhaber: Unilin, BV, 8710 Wielsbeke (BE)
(72) Erfinder: PRIETO, Raul, 48308 Senden (DE)
(74) Vertreter: Unilin Technologies

(56) Entgegenhaltungen:
- EP-A1- 3 256 637
- US-A- 5 929 188
- US-A1- 2020 199 378

## Beschreibung

Die Erfindung betrifft die Verwendung einer fluorfreien Beschichtungszusammensetzung, eine fluorfreie Beschichtungszusammensetzung sowie einen mit der Beschichtungszusammensetzung beschichteten Bodenbelag.

Bodenbelege wie Laminat oder Parkett werden heutzutage üblicherweise mechanisch miteinander verbunden und nicht mehr mit Hilfe von Klebstoffen. Hierbei haben sich Aufbauten aus Nut und Feder bewährt.

Die Belege weisen jedoch das Problem auf, dass Wasser oder Reinigungschemikalien in die Fugen eindringen. Hierdurch quellen die Belege in den Kantenbereichen auf. Unregelmäßige Oberflächen, die wenig ästhetisch sind, und dadurch resultierende Stolperfallen sind die Folge. Darüber hinaus kann das Wasser durch die Fugen unter den Bodenbelag laufen; dadurch kann Wasser in den Boden einziehen oder Schimmelbildung verursachen.

Im Stand der Technik werden daher Öle oder Wachse als Imprägniermittel für Bodenbeläge eingesetzt, die insbesondere Wasser oder wässrige Lösungen abweisen. Allerdings trocknen diese Einsatzstoffe nicht vollständig ab, bieten nur oberflächlich Schutz oder sind nicht von Dauer. Darüber hinaus lassen sich Wachse sehr schlecht auftragen. Hohe Schichtdicken sind die Folge, so dass sich die einzelnen Platten nicht ordnungsgemäß miteinander verbinden lassen. Darüber hinaus sind die eingesetzten Stoffe häufig fluorhaltig, was sowohl für die Umwelt als auch für die Nutzer schädlich ist.

US 5929188 A offenbart die Verwendung einer wäßrigen fluorfreien Beschichtungszusammensetzung für Textil.

Es bestand daher der Wunsch nach einem Beschichtungsmittel für Bodenbeläge insbesondere für den Innenbereich, das im Kantenbereich von Bodenbelagselementen oder vollflächig aufgetragen werden kann und einen ausreichenden Schutz gegen Wasser und Reinigungschemikalien bietet. Zudem sollten die Beschichtungsmittel aus Umweltschutzgründen fluorfrei sein. Sie sollten sich leicht auftragen lassen und ausreichend in das Bodenmaterial eindringen.

Gelöst werden konnte diese Aufgabe durch die Verwendung einer fluorfreien Beschichtungszusammensetzung zum Imprägnieren von Bodenbelägen. Die Erfindung ist dargelegt im angefügten Anspruchssatz. Diese Beschichtungszusammensetzung gemäß der Erfindung enthält mindestens eine Polycarbodiimidverbindung a, wobei die mindestens eine Polycarbodiimidverbindung mindestens zwei Kohlenwasserstoffgruppen aufweist, die jeweils mindestens 4 Kohlenstoffatome, vorzugsweise mindestens 12 Kohlenstoffatome, bevorzugt mindestens 16 Kohlenstoffatome, aufweisen.

Die erfindungsgemäß verwendete Zusammensetzung wird eingesetzt, um die wasserabweisende Wirkung von Substraten heraufzusetzen.

Eine "fluorfreie" Beschichtungszusammensetzung bedeutet hier, dass eine Zusammensetzung, die zum Imprägnieren verwendet wird, weniger als 1 Gewichtsprozent (1 Gew.-%) Fluor in einer Zusammensetzung enthält. In bestimmten Ausführungsformen bedeutet eine "fluorfreie" Beschichtungszusammensetzung, dass eine Beschichtungszusammensetzung vorzugsweise weniger als 0,5 Gew.-%, weniger als 0,1 Gew.-% oder weniger als 0,01 Gew.-% enthält. Das Fluor kann in Form von organischen oder anorganischen fluorhaltigen Verbindungen vorliegen.

Die Polycarbodiimid-Verbindungen weisen mindestens zwei Kohlenwasserstoffgruppen, die jeweils mindestens 4 Kohlenstoffatome enthalten, auf. In bestimmten Ausführungsformen sind nützliche Polycarbodiimid-Verbindungen von einer Carbodiimidisierungsreaktion (d.h. einer Reaktion, bei der (N=C=N)-Gruppen gebildet werden) einer Carbodiimidisierungsreaktionsmischung, die mindestens ein Oligomer enthält, wobei ein solches Oligomer mindestens eine (typischerweise eine) Isocyanat-Endgruppe und mindestens zwei sich wiederholende Einheiten enthält, wobei jede der mindestens zwei sich wiederholenden Einheiten mindestens eine (typischerweise eine) Kohlenwasserstoffgruppe mit mindestens 4 Kohlenstoffatome (und in bestimmten Ausführungsformen bis zu 60 Kohlenstoffatome oder bis zu 30 Kohlenstoffatome) aufweist.

In einer Ausführungsform der Erfindung stammt die mindestens eine Polycarbodiimidverbindung von einer Carbodiimidisierungsreaktion einer Carbodiimidisierungsreaktionsmischung, die mindestens ein Oligomer umfasst, ab, wobei das Oligomer mindestens eine Isocyanat-Endgruppe und mindestens zwei Wiederholungseinheiten umfasst, wobei jede der mindestens zwei Wiederholungseinheiten mindestens eine Kohlenwasserstoffgruppe mit mindestens 4 Kohlenstoffatomen umfasst. In einer weiteren Ausführungsform stammt die Polycarbodiimidverbindung von einer Carbodiimidisierungsreaktion einer Carbodiimidisierungsreaktionsmischung, die 4,4'-Methylenbis(phenylisocyanat) und ein Acrylatoligomer in einem Molverhältnis von 2 : 1 bis 10 : 1 umfasst, abstammt, wobei das Acrylatoligomer durch Reaktion einer Oligomerisationsreaktionsmischung, die Mercaptoethanol und Octadecylacrylat in einem Molverhältnis von 1 : 4 bis 1 : 20 umfasst, hergestellt ist, oder einer Oligomerisationsreaktionsmischung, die Mercaptoethanol und ein Reaktionsprodukt von Octadecylisocyanat mit 2-Hydroxyethyl(meth)acrylat oder Octradecylisocyanat mit 2-Isocyanatoethyl(meth)acrylat umfasst, wobei das Mercaptoethanol und das Reaktionsprodukt in einem Molverhältnis von 1 : 4 bis 1 : 20 umgesetzt sind, hergestellt ist.

Oligomere umfassen Verbindungen mit mindestens 2 und bis zu 20 sich wiederholenden Einheiten. Gemäß einer besonderen Ausführungsform hat das Oligomer 3 bis 15 sich wiederholende Einheiten. Gemäß einer anderen Ausführungsform hat das Oligomer 4 bis 15 sich wiederholende Einheiten. In bestimmten Ausführungsformen hat ein Oligomer ein gewichtsmittleres Molekulargewicht von bis zu 50.000 g/mol.

Die Zusammensetzung umfasst mindestens ein Paraffinwachs b. Vorzugsweise hat das Paraffinwachs einen Schmelzpunkt von 40 °C bis 75 °C. In bevorzugten Ausführungsformen hat das Paraffinwachs einen Schmelzpunkt von 60 °C bis 75 °C. Vorzugsweise beträgt das Massenverhältnis von Paraffinwachs b zu Polycarbodiimid a 3:7 bis 7:3, bevorzugt 5:5 bis 7:3.

Der Anteil an Polycarbodiimidverbindung und Paraffiinwachs in der Zusammensetzung beträgt 1 bis 20 Gew.-%, bezogen auf das Gesamtgewicht der Zusammensetzung.

Geeignete Polycarbodiimidverbindungen und Paraffinwachse sowie ihre Herstellung werden beispielsweise in der US 11124918 B2 beschrieben.

Die Beschichtungszusammensetzung umfasst mindestens ein Polymer c ausgewählt aus Alkydharzen, Acrylatharzen, Polyurethan-modifizierte Polyester, Siloxanen oder Mischungen daraus. Der Anteil des Polymers beträgt 5 bis 40 Gew.-%, bezogen auf das Gesamtgewicht der Zusammensetzung. Die Polymere können anionische Gruppen, bspw. Sulfonsäuregruppen, tragen.

Das Alkydharz kann beispielsweise ein Langöl- oder Mittelölalkyd sein. Bei Langölalkyden handelt es sich um Alkydharze mit einem Fettsäuregehalt von mehr als 60 %; Mittelölalkyde umfassen 40 bis 60 % Fettsäuren. Geeignete Fettsäuren sind beispielsweise pflanzliche Fettsäuren. Die Säurezahl ist vorzugsweise kleiner 20 mg KOH/g; die lodzahl vorzugsweise kleiner 20. Das Alkydharz kann Urethan- oder Isocyanat-modifiziert sein oder nicht, um die Wasserbeständigkeit zu fördern. Der Vorteil ist dreifach: Neben dem Preisvorteil sorgt das Alkyd nicht nur für eine erhöhte Viskosität, sondern insbesondere bei einem mittel- oder langkettigen Harz dringt es weniger tief in das Holz ein und kann eine erste Barriere bedingt zu seiner geringen Streuung. Das Harz bildet einen äußeren Film. Da eine relativ dünne Schicht aufgetragen wird, muss die Beschichtung nicht getrocknet werden, um den aktuellen ökologischen Standards (AgbB usw.) zu entsprechen.

Acrylatharze können Reinacrylate oder Styrolacrylate umfassen. Geeignete Monomere sind beispielsweise Methylmethacrylat, Styrol, Acrylnitril, Butylmethacrylat, Ethylacrylat, Buthylacrylat oder Ethylhexylacrylat. Zudem können Monomere wie etwa Methacrylsäure, Glycidylmethacrylat, 3-(Trimethoxysilyl)-propylmethacrylat, Acetoacetoxyethylmethacrylat, Acrylsäure, Itaconsäure oder Diacetonacrylamid eingearbeitet sein. Geeignete Acrylatharze werden beispielsweise von BASF (Deutschland) unter dem Namen Joncryl angeboten.

Polyurethan-modifizierte Polyester sind beispielsweise verzweigte, ungesättigte, aromatische oder aliphatische Polymere. Sie weisen ein zahlenmittleres Molukulargewicht zwischen 1000 und 20000 g/mol auf. Der Anteil an freien OH-Gruppen beträgt vorzugsweise 0,5 bis 5 Gew.-%, bezogen auf das Gesamtgewicht des Polyesters.

Siloxane umfassen beispielsweise Polysiloxane, wobei die Siloxan-Monomereinheit ein bis 12 C-Atome aufweist. Sie können in den Seitengruppen Alkyl-, Alkenyl- wie Vinyl-, Aryl- wie Phenyl-, Amino-, Alkoxy- oder H-Gruppen tragen. Die Alkylgruppen sind bevorzugt, wobei Methyl-(Polydimethylsiloxane PDMS), Methoxy- oder Ethoxygruppen besonders bevorzugt sind. Geeignete Siloxane werden beispielsweise angeboten von Dow Corning (U.S.A.) - Dowsil-Produkte, Evonik (Deutschland) - Tegophobe 6600, Wacker (Deutschland) - TES28, Momentive (U.S.A.) - Silquest-Produkte.

Die zuvor genannten Polymere können insbesondere in Form von Lösungen oder Dispersionen eingesetzt werden.

In einer bevorzugten Ausführungsform beträgt das Massenverhältnis aus (Polycarbodiimidverbindung a + Paraffinwachs b) : Polymer c 10:90 bis 90:10, vorzugsweise 70:30 bis 95:5.

Die Beschichtungszusammensetzung umfasst vorzugsweise mindestens ein Lösemittel d. Hierzu zählen sowohl Wasser als auch organische Lösemittel, wobei Wasser oder wässrige Mischungen bevorzugt sind. Wasser und wässrige Mischungen sind vorteilhaft, da sie besonders umweltverträglich sind. Lösemittelmischungen sind vorzugsweise homogen. Geeignete organische Lösemittel sind Alkane einschließlich verzweigter Alkane, vorzugsweise mit 10 bis 20 Kohlenstoffatomen, Alkohole mit 1 bis 6, vorzugsweise 1 bis 4 C-Atomen und Ester wie Acetate aus Alkoholen mit 1 bis 10 C-Atomen. Ethylacetat ist weniger bevorzugt, da dieses explosionsgefährlich ist. Für wässrige Mischungen sind insbesondere hydrophile organische Lösemittel geeignet, die mit Wasser mischbar sind, wie zum Beispiel Alkohole. Der Anteil an Lösemittel beträgt vorzugsweise 20 bis 95 Gew.-%, bezogen auf das Gesamtgewicht der Zusammensetzung.

Für wasserfreie Beschichtungsmittel werden insbesondere Alkydharze oder Siloxane als Polymere gewählt. Wässrige Beschichtungsmittel enthalten vorzugsweise Acrylatharze, Polyurethan-modifizierte Polyester oder Siloxane als Polymere. Die Beschichtungszusammensetzung kann Hilfsmittel wie Tenside, oberflächenaktive Mittel, koaleszierende Lösungsmittel, Frostschutzmittel, Emulgatoren oder Stabilisatoren gegen einen oder mehrere Mikroorganismen enthalten. Geeignete Hilfsmittel werden in der US 11124918 B2 offenbart. Es ist bevorzugt, dass die Beschichtungszusammensetzung homogen ist. Der Anteil an Hilfsmitteln beträgt vorzugweise 0,1 bis 20 Gew.-%, bezogen auf das Gesamtgewicht an Zusammensetzung
Die Beschichtungszusammensetzung kann 1 bis 10 Gew.-%, bezogen auf das Gesamtgewicht der Zusammensetzung, Farbmittel wie Farbstoffe oder Pigmente enthalten. Diese können bspw. die beim Fräsen entstehenden Linien oder die Erscheinung verschiedener Materialien überdecken. Diese Farbmittel sollen insbesondere keinen Einfluss auf die Wasserfestigkeit und -abweisung haben.

Zur Herstellung der Beschichtungszusammensetzung können die einzelnen Bestandteile zugegeben und bspw. mittels Rührer miteinander vermischt werden. Die einzelnen Bestandteile können vorab in geeigneten Lösemitteln gelöst sein.

Geeignete Substrate sind Bodenbeläge, wobei Belege für den Innenbereich bevorzugt sind. Diese umfassen homogene oder heterogene Kunststoffbeläge, bspw. umfassend Polyvinylchorid, Polyolefine, Kautschuk, Linoleum oder Quarzvinyl. Zudem ist Kork geeignet. Die zuvor genannten Beläge sind elastische Beläge. Weiterhin können Laminatböden, Parkett inklusive Fertigparkett und Dielenböden umfasst sein. Letzte zählen zu den Hartbelägen. Sie sind üblicherweise aus Holz wie Massivholz, Furnier oder Spanholz gefertigt. Darüber hinaus können mineralische Substrate umfasst sein, wobei elastische und Hartbelege bevorzugt sind. Nicht umfasste Substrate sind Teppichböden.

Die Belege können homogen, d.h. aus einem einzigen Material, oder aus einer Mischung gefertigt sein. Hierzu zählen beispielsweise Bodenbeläge wie Solid-Polymer-Core (SPC) oder Wood-Plastic-Compound (WPC). Zudem können die Beläge mehrschichtig sein, wie z.B. Cushioned Vinyl oder Lamiate, die beispielsweise hochdichte Faserplatten (HDF) oder mitteldichte Faserplatten (MDF) umfassen. Die Belege können bspw. eine Schaumstoffbeschichtung aufweisen. Die Belege können eine dekorative Deckschicht umfassen und bspw. gemustert oder unifarben sein.

Die Beschichtungszusammensetzung kann auf die Kanten der Bodenbeläge, die Ober- oder Unterseite oder auf die gesamte Fläche aufgetragen werden. Das Auftragen der Beschichtungszusammensetzung auf die Kanten von Bodenbelägen (häufig in Form von Bodenpaneelen) erfolgt zunächst mittels einer Transfertechnik, bei der die Zusammensetzung zunächst auf ein Rad oder eine Walze aufgetragen und dann durch das Rad oder die Walze auf die Kante des Paneels übertragen wird.

Dieses Applikationsverfahren ähnelt dem in WO 2006/038867 beschriebenen. Das lösungsmittelbasierte oder wasserbasierte Gemisch kann möglicherweise eine niedrige Viskosität aufweisen, sodass es nicht leicht von dem Rad aufgenommen wird und leicht von dem Rad zurück in das Flüssigkeitsreservoir fließt.

Neben dem Transferauftrag kann die erfindungsgemäße Zusammensetzung im Spritzverfahren, insbesondere automatisiert, beispielsweise mittels Hochdruckspritzverfahren, oder durch manuellen Auftrag wie Pinsel oder Rolle aufgetragen werden. Der Vorteil einer solchen Anwendung ist, dass eine höhere Schichtdicke erreicht werden kann, was die Wasserbeständigkeit verbessert.

Die Beschichtungszusammensetzung wird vorzugsweise in einer Menge aufgetragen, die 0,1 bis 30 g/m² entspricht, vorzugsweise 1 bis 10 g/m² (Trockenschicht).

Fluorfreie Beschichtungszusammensetzungen gemäß der Erfindung, enthalten mindestens ein Polymer c ausgewählt aus Alkydharzen, Acrylatharzen, Polyurethan-modifizierte Polyestern, Silanen, Siloxanen oder Mischungen daraus sowie mindestens eine Polycarbodiimidverbindung a, wobei die mindestens eine Polycarbodiimidverbindung mindestens zwei Kohlenwasserstoffgruppen aufweist, die jeweils mindestens 4 Kohlenstoffatome aufweisen. Die Zusammensetzung enthält mindestens ein Paraffinwachs b. Zudem enthält die Zusammensetzung vorzugsweise mindestens ein Lösemittel d. Die Definitionen von Polymer, Polycarbodiimid, Paraffinwachs und Lösemittel ist bereits zuvor beschrieben.

Ein weiterer Aspekt der Erfindung ist ein Bodenbelag, der teilweise oder vollständig mit der erfindungsgemäßer Beschichtungszusammensetzung beschichtet ist. Bevorzugte Bodenbeläge sind oben bereits genannt worden.

### Beispiele

Es wurden unbeschichtete MDF/HDF-Laminat-Platten mit Beschichtungszusammensetzungen beschichtet. Hierbei wurden zur Bestimmung der Imprägniergüte der Kontaktwinkel sowie die Quellung an der Kante ermittelt.

### Prüfungen

### Kontaktwinkelmessung

Kanten von rohen, unbeschichteten MDF/HDF-Laminat-Platten werden mittels Pinsel beschichtet; Trocknung: mind. 24 h bei RT; über ein Kontaktwinkelmessgerät (OK 15E10) werden Wassertropfen (0,2 mL bis 0,3 mL) auf die Kante gesetzt; Messung Kontaktwinkel
< 90°: hydrophil
> 90° bis 130°: hydrophob
> 130°: superhydrophob

### Quellung der Kante

### Trocknungszeiten: mind. 24 h bei RT

Rohe, unbeschichtete MDF/HDF-Laminat-Platten, jeweils mit Nut oder Feder, 7 x 15 cm, werden die Kantenstärken mit Dickenmessgerät an verschiedenen Punkten vermessen; die Platten werden anschließend mittels Pinsel beschichtet; Auftragsmengen werden über Rückwaage ermittelt und die Auftragsmenge berechnet und auf g/m² ermittelt (ca. 2 bis 5 g/m²); Laminat wird über Nut/Feder auf Spannung geklickt und die zusammengeklickten Fugen mit einem nassen Tuch mit vordefiniertem Gewicht bewässert; Sichtungstests und Dickenmessung nach 12 h mittels visueller Begutachtung
1 sehr starke Quellungen
2 starke Quellungen
3 leichte Quellungen
4 kaum sichtbare Quellungen
5 keine Quellungen
mittels Dickenmessgerät (Käfer FD50); die Dicke sollte maximal 0,1 mm betragen

### Beispiele

**Tabelle 1. Wässrige Beschichtungszusammensetzungen**

| | **Vergleichsbeispiel 1** | **Beispiel 1** | Beispiel 2 |
|---|---|---|---|
| **Polycarbodiimidverbindung + Paraffinwachs** | 0,25 | 6 | 6 |
| **Silan** | 2 | 5 | 10 |
| **Polyurethan-modifizierte Polyester** | 4 | 10 | 20 |
| **Organische Lösemittel** | - | - | - |
| **Wasser** | 91,75 | 69 | 54 |
| **Hilfsmittel** | 2 | 10 | 10 |

**Tabelle 2. Bestimmung der imprägnierenden Wirkung wässriger Beschichtungszusammensetzungen**

| | **Vergleichsbeispiel 1** | **Beispiel 1** | **Beispiel 2** |
|---|---|---|---|
| **Kontaktwinkel** | 85° | 120° | 125° |
| **Messung Dicke / mm** | 0,5 | 0,1 | 0,1 |
| **Optische Bewertung** | 2 | 5 | 5 |

**Tabelle 3. Nichtwässrige Beschichtungszusammensetzungen**

| | **Vergleichsbeispiel 2** | **Beispiel 3** | **Beispiel 4** |
|---|---|---|---|
| **Polycarbodiimidverbindung** + **Paraffinwachs** | 0,25 | 5 | 7,5 |
| **Silan** | 1 | 5 | 2,5 |
| **Alkydharz** | 1,8 | 9 | 9 |
| **Organische Lösemittel** | 94,95 | 76 | 71 |
| **Wasser** | - | - | - |
| **Hilfsmittel** | 2 | 5 | 10 |

**Tabelle 4. Bestimmung der imprägnierenden Wirkung nichtwässriger Beschichtungszusammensetzungen**

| | **Vergleichsbeispiel 2** | **Beispiel 3** | **Beispiel 4** |
|---|---|---|---|
| **Kontaktwinkel** | 70° | 110° | 127° |
| **Messung Dicke / mm** | 0,6 | 0,1 | 0,1 |
| **Optische Bewertung** | 1 | 4-5 | 5 |

Die Beispiele 1 bis 4 demonstrieren, dass die erfindungsgemäßen Beschichtungszusammensetzungen an Laminatkanten eine hohe hydrophobe, imprägnierende Wirkung zeigen und keine Quellungen durch Wasserkontakt zustande kommen.

## Patentansprüche

1. Verwendung einer fluorfreien Beschichtungszusammensetzung die weniger als 1 Gewichtsprozent (1 Gew.-%) Fluor in einer Zusammensetzung enthält, enthaltend
a. mindestens eine Polycarbodiimidverbindung, wobei die mindestens eine Polycarbodiimidverbindung mindestens zwei Kohlenwasserstoffgruppen aufweist, die jeweils mindestens 4 Kohlenstoffatome aufweisen,
b. mindestens ein Paraffinwachs,
c. mindestens ein Polymer ausgewählt aus Alkydharzen, Acrylatharzen, polyurethan-modifizierten Polyestern, Siloxanen oder Mischungen daraus:
zum Imprägnieren von Bodenbelägen, wobei Teppiche nicht umfasst sind;
wobei, bezogen auf das Gesamtgewicht der Beschichtungszusammensetzung, der Anteil an Polycarbodiimidverbindung und Paraffiinwachs in der Beschichtungszusammensetzung 1 bis 20 Gew.-% beträgt und der Anteil an Polymer in der Beschichtungszusammensetzung 5 bis 40 Gew.-% beträgt.

2. Verwendung nach Anspruch 1, **dadurch gekennzeichnet, dass** das Massenverhältnis von Paraffinwachs zu Polycarbodiimid 3:7 bis 7:3 beträgt.

3. Verwendung nach Ansprüche 1 oder 2, **dadurch gekennzeichnet, dass** das Massenverhältnis von (a+b):c 10:90 bis 90:10 beträgt.

4. Verwendung nach einem der vorherigen Ansprüche, **dadurch gekennzeichnet, dass** die Beschichtungszusammensetzung weiterhin
d. mindestens ein Lösemittel enthält.

5. Verwendung nach Anspruch 4, **dadurch gekennzeichnet, dass** ein Lösemittel ausgewählt wird, das Wasser umfasst.

6. Fluorfreie Beschichtungszusammensetzung die weniger als 1 Gewichtsprozent (1 Gew.-%) Fluor in einer Zusammensetzung enthält, enthaltend
a. mindestens eine Polycarbodiimidverbindung, wobei die mindestens eine Polycarbodiimidverbindung mindestens zwei Kohlenwasserstoffgruppen aufweist, die jeweils mindestens 4 Kohlenstoffatome aufweisen,
b. mindestens ein Paraffinwachs,
c. mindestens ein Polymer ausgewählt aus Alkydharzen, Acrylatharzen, polyurethan-modifizierten Polyestern, Siloxanen oder Mischungen daraus;
wobei, bezogen auf das Gesamtgewicht der Beschichtungszusammensetzung, der Anteil an Polycarbodiimidverbindung und Paraffiinwachs in der Beschichtungszusammensetzung 1 bis 20 Gew.-% beträgt und der Anteil an Polymer in der Beschichtungszusammensetzung 5 bis 40 Gew.-% beträgt.

7. Beschichtungszusammensetzung nach Anspruch 6, **dadurch gekennzeichnet, dass** mindestens ein Lösemittel enthalten ist.

8. Bodenbelag beschichtet mit einer Beschichtungszusammensetzung nach einem der Ansprüche 6 oder 7.

## Claims

1. Use of a fluorine-free coating composition, which contains less than 1% by weight (1% w/w) of fluorine in a composition, comprising:
a. at least one polycarbodiimide-based compound; wherein said at least one polycarbodiimide-based compound contains at least two hydrocarbon groups, each having at least 4 carbon atoms;
b. at least one paraffin wax;
c. at least one polymer selected from alkyd resins, acrylic resins, polyurethane-modified polyesters, siloxanes or mixtures thereof;
for impregnating floor coverings, excluding carpets;
wherein, based on the total weight of the coating composition, the proportion of the polycarbodiimide-based compound and paraffin wax in the coating composition is from 1 to 20% by weight and the proportion of the polymer in the coating composition is from 5 to 40% by weight.

2. Use according to claim 1, **characterised in that** the mass ratio of paraffin wax to polycarbodiimide is between 3:7 and 7:3.

3. Use according to claim 1 or 2, **characterised in that** the mass ratio (a+b):c is from 10:90 to 90:10.

4. Use according to one of the preceding claims, **characterised in that** the coating composition further contains:
d. at least one solvent.

5. Use according to claim 4, **characterised in that** a solvent comprising water is selected.

6. Fluorine-free coating composition, which contains less than 1% by weight (1% w/w) of fluorine in a composition, comprising:
a. at least one polycarbodiimide-based compound; wherein said at least one polycarbodiimide-based compound contains at least two hydrocarbon groups, each having at least 4 carbon atoms;
b. at least one paraffin wax;
c. at least one polymer selected from alkyd resins, acrylic resins, polyurethane-modified polyesters, siloxanes or mixtures thereof;
wherein, based on the total weight of the coating composition, the proportion of the polycarbodiimide-based compound and paraffin wax in the coating composition is from 1 to 20% by weight and the proportion of the polymer in the coating composition is from 5 to 40% by weight.

7. Coating composition according to claim 6, **characterised in that** it contains at least one solvent.

8. Floor covering coated with a coating composition according to any one of claims 6 or 7.

## Revendications

1. Utilisation d'une composition de revêtement exempte de fluor, qui contient moins de 1 % en poids (1 % p/p) de fluor dans une composition, qui contient :
a. au moins un composé à base de polycarbodiimide ; dans lequel ledit au moins un composé à base de polycarbodiimide contient au moins deux groupes hydrocarbonés qui possèdent chacun au moins 4 atomes de carbone ;
b. au moins une cire de paraffine ;
c. au moins un polymère choisi parmi des résines alkydes, des résines acryliques, des polyesters modifiés avec du polyuréthane, des siloxanes ou leurs mélanges ;
à des fins d'imprégnation de revêtements de sol, à l'exclusion des moquettes ; dans laquelle, par rapport au poids total de la composition de revêtement, la proportion du composé à base de polycarbodiimide et de cire de paraffine dans la composition de revêtement s'élève de 1 à 20 % en poids et la proportion de polymère dans la composition de revêtement s'élève de 5 à 40 % en poids.

2. Utilisation selon la revendication 1, **caractérisée en ce que** le rapport massique entre la cire de paraffine et le polycarbodiimide s'élève de 3:7 à 7:3.

3. Utilisation selon la revendication 1 ou 2, **caractérisée en ce que** le rapport massique (a+b):c s'élève de 10:90 à 90:10.

4. Utilisation selon l'une des revendications précédentes, **caractérisée en ce que** la composition de revêtement contient en outre : d. au moins un solvant.

5. Utilisation selon la revendication 4, **caractérisée en ce que** l'on choisit un solvant qui comprend de l'eau.

6. Composition de revêtement exempte de fluor, qui contient moins de 1 % en poids (1 % p/p) de fluor dans une composition, qui contient :
a. au moins un composé à base de polycarbodiimide ; dans lequel ledit au moins un composé à base de polycarbodiimide contient au moins deux groupes hydrocarbonés qui possèdent chacun au moins 4 atomes de carbone ;
b. au moins une cire de paraffine ;
c. au moins un polymère choisi parmi des résines alkydes, des résines acryliques, des polyesters modifiés avec du polyuréthane, des siloxanes ou leurs mélanges ;
dans laquelle, par rapport au poids total de la composition de revêtement, la proportion du composé à base de polycarbodiimide et de cire de paraffine dans la composition de revêtement s'élève de 1 à 20 % en poids et la proportion de polymère dans la composition de revêtement s'élève de 5 à 40 % en poids.

7. Composition de revêtement selon la revendication 6, **caractérisée en ce qu'**elle contient au moins un solvant.

8. Revêtement de sol recouvert d'une composition de revêtement selon l'une des revendications 6 ou 7.
